# FASCICULE DE BREVET EUROPEEN

(11) **EP 4 257 866 B1**
(45) Date de publication et mention de la délivrance du brevet: **04.06.2025**
(21) Numéro de dépôt: 23159844.2
(22) Date de dépôt: 03.03.2023
(51) Int. Cl.: F16N 29/00, F16H 57/04, F01M 11/06, F16N 7/02, F16N 7/38, F01M 11/00

(54) **SYSTÈME MÉCANIQUE MUNI D'UN CARTER LOGEANT AU-DESSUS D'ÉLÉMENTS À LUBRIFIER OU À REFROIDIR UN RÉSERVOIR D'UN SYSTÈME FLUIDIQUE LUBRIFIANT**
MECHANISCHES SYSTEM MIT EINEM GEHÄUSE, DAS ÜBER SCHMIER- ODER KÜHLELEMENTE EINES TANKS EINES SCHMIERENDEN FLUIDSYSTEMS UNTERGEBRACHT IST
MECHANICAL SYSTEM PROVIDED WITH A HOUSING ACCOMMODATING COMPONENTS TO BE LUBRICATED OR COOLED, AND A RESERVOIR OF A LUBRICATING FLUID SYSTEM

(30) Priorité: 07.04.2022 FR 2203178
(43) Date de publication de la demande: 11.10.2023
(73) Titulaire: Airbus Helicopters, 13725 Marignane Cedex (FR)
(72) Inventeur: DEPORT, Stéphane, 13100 Aix en Provence (FR); BARAIS, Olivier, 13820 Ensues la Redonne (FR); GENEIX, Jérôme, 13140 Miramas (FR)
(74) Mandataire: GPI Brevets

(56) Documents cités:
- EP-A1- 0 696 697
- EP-A1- 3 647 206
- FR-A1- 2 658 577
- FR-A1- 2 798 983
- US-A1- 2020 271 194

## Description

La présente invention concerne un système mécanique muni d'un carter logeant au-dessus d'éléments à lubrifier ou à refroidir un réservoir d'un système fluidique lubrifiant.

La présente invention se rapporte au domaine de la lubrification et du refroidissement de systèmes mécaniques et notamment des boîtes de transmission de puissance, voire en particulier des boîtes de transmission de puissance destinées à un aéronef à voilure tournante.

Un aéronef à voilure tournante de type giravion comporte un rotor participant au moins partiellement à la sustentation de cet aéronef. Pour mettre en rotation un tel rotor, un giravion est muni d'une installation motrice comportant au moins un moteur. En outre, une boîte de transmission de puissance peut être interposée entre au moins un moteur et au moins un rotor. Une boîte de transmission de puissance comporte des éléments à lubrifier ou à refroidir, tels que des engrenages, des systèmes de réduction de vitesse ou autres. Un système fluidique lubrifiant permet d'acheminer un fluide lubrifiant sur des éléments pour les lubrifier et/ou les refroidir. De tels éléments sont dénommés « éléments à lubrifier ou refroidir » par la suite.

Selon une première solution technique, un système fluidique lubrifiant comporte un unique circuit fluidique. Ce circuit fluidique comporte un fluide reposant dans un réservoir formé par le fond d'un carter du système mécanique à lubrifier ou à refroidir. De plus, le circuit fluidique est muni d'une pompe puisant le fluide dans le réservoir du système mécanique via une crépine. La pompe déplace alors le fluide vers au moins un circuit de projection de fluide, dénommé parfois « rampe de lubrification » ou encore « rampe d'aspersion de fluide ». Le fluide est alors expulsé en dehors du circuit de projection de fluide pour atteindre les éléments à lubrifier ou à refroidir avant de retourner par gravité dans le fond du carter. Eventuellement, le circuit fluidique comporte un refroidisseur, un réchauffeur, voire un filtre en amont du circuit de projection de fluide. Le terme « réchauffeur » désigne un appareil apte à élever la température d'un fluide, à l'inverse d'un refroidisseur.

Un système mécanique ayant un carter muni d'un fond formant un réservoir de fluide lubrifiant est usuellement qualifié de « carter humide ».

Bien qu'efficace, un tel système fluidique lubrifiant à carter humide est susceptible de présenter une fuite non désirée. Des réglementations peuvent requérir un fonctionnement du système mécanique pendant un temps minimal en cas de défaillance ou de fuite du système fluidique lubrifiant. Par exemple, un règlement peut imposer qu'une boîte de transmission de puissance d'un giravion puisse continuer de fonctionner pendant trente minutes suite à une panne de son système fluidique lubrifiant.

Eventuellement, un système fluidique peut alors comprendre un circuit fluidique principal du type décrit précédemment et un circuit fluidique de secours. Le circuit fluidique principal et le circuit fluidique de secours sont configurés pour puiser un fluide lubrifiant dans le fond d'un carter d'un système mécanique et pour acheminer ce fluide vers un même circuit de projection de fluide ou des circuits de projection de fluide distincts. Le circuit fluidique de secours est alors configuré pour se substituer au circuit fluidique principal si nécessaire, par exemple en présence d'une chute de pression dans le circuit fluidique principal.

Le circuit fluidique de secours vise à autoriser le fonctionnement du système mécanique au moins pendant une durée prédéterminée en cas de panne du circuit fluidique principal.

Par ailleurs, un système mécanique peut atteindre durant son utilisation des inclinaisons variées. Par exemple, un aéronef peut présenter des angles d'assiette qui varient dans le domaine de vol autorisé. En particulier, un giravion muni d'une aile et d'au moins une hélice peut atteindre des angles à cabrer ou à piquer importants. En présence d'une inclinaison importante, un élément à lubrifier ou à refroidir du système mécanique peut être au moins partiellement immergé dans le fluide lubrifiant ce qui peut induire un échauffement non désiré du fluide et/ou de l'élément à lubrifier ou à refroidir par effet de barbotage.

Le système fluidique lubrifiant d'un aéronef peut alors être dimensionné pour prendre en compte cet aspect. En particulier, le système fluidique lubrifiant peut être dimensionné pour acheminer un fluide lubrifiant sur des éléments d'une boîte de transmission de puissance dans tout le domaine de vol autorisé, et pour éviter un barbotage de certains éléments dans tout le domaine de vol autorisé et notamment en présence d'inclinaisons importantes.

En particulier, le carter humide d'un système mécanique peut être étudié pour éviter qu'un élément à lubrifier ou à refroidir barbote dans le fluide situé dans le fond du système mécanique en présence de certaines inclinaisons autorisées. De manière alternative ou complémentaire, des pompes peuvent déplacer le fluide présent au sein d'une zone du fond du carter vers une autre zone du fond du carter pour éviter un phénomène de barbotage.

Dès lors, le carter du système mécanique peut présenter des formes complexes. Un tel carter peut alors avoir un encombrement non négligeable ce qui peut avoir un impact sur l'agencement du système mécanique, par exemple au sein d'un aéronef.

Selon un autre exemple, un système fluidique lubrifiant peut comprendre un réservoir non pas formé par le carter du système mécanique à lubrifier, mais situé en dehors du système mécanique. Une première pompe achemine le fluide contenu du fond du carter du système mécanique vers le réservoir. Une deuxième pompe achemine le fluide du réservoir vers des éléments à lubrifier ou à refroidir du système mécanique, ce fluide retournant ensuite par gravité dans le fond du carter pour être aspiré par la première pompe. Le fluide lubrifiant n'est alors pas stocké dans le fond du carter du système mécanique. Le carter est par suite qualifié de carter sec par opposition à un carter humide. Un tel système est intéressant puisque le fond du système mécanique ne contient pas un volume de fluide lubrifiant dans lequel un élément à lubrifier ou à refroidir du système mécanique pourrait barboter. Par contre, un tel système présente un risque de fuite externe, à savoir en dehors du système mécanique et par exemple entre le système mécanique et le réservoir.

Le brevet FR 3047764 décrit un système mécanique à carter humide muni d'un système fluidique lubrifiant. Le système fluidique lubrifiant comporte un circuit fluidique principal du type décrit précédemment. De plus, le système fluidique lubrifiant comporte un circuit fluidique de secours comprenant un réservoir interne dédié à usage unique. Ce réservoir interne comporte un contenant situé au-dessus des éléments à lubrifier ou à refroidir, et non pas dans le fond du carter du système mécanique. Le contenant est relié par un moyen de déclenchement au circuit de projection de fluide. En cas de défaillance du circuit fluidique principal, le réservoir alimente par gravité le circuit de projection de fluide du circuit fluidique principal.

Le brevet US 10844948 B2 décrit un système mécanique à carter humide comportant un réservoir principal alimentant en fluide au moins un circuit de projection de fluide via au moins un circuit fluidique. Une partie du fluide projeté retombe par gravité dans le réservoir principal et dans au moins un réservoir de récupération. Chaque réservoir de récupération alimente en fluide le réservoir principal via un système d'acheminement qui comporte un éjecteur. Chaque éjecteur est relié à au moins un circuit fluidique.

Un éjecteur est un organe connu. Grâce à un flux primaire de fluide, l'éjecteur peut aspirer un flux secondaire de fluide. Les flux primaire et secondaire sont mélangés dans l'éjecteur avant d'être conjointement éjectés en dehors de l'éjecteur. Un éjecteur est parfois dénommé « jetpump » en langue anglaise ou encore « pompe à effet venturi ».

Le brevet FR 2010022 décrit un système mécanique à carter humide comportant un système de lubrification. Le système de lubrification comporte un réservoir principal formé par le fond du carter du système mécanique et contenant un fluide de lubrification. Le système de lubrification comprend par ailleurs un générateur de débit principal ainsi que des dispositifs de projection du liquide de lubrification pour acheminer le fluide de lubrification du réservoir vers des éléments à lubrifier, le fluide tombant ensuite par gravité dans le réservoir principal. Ainsi, le circuit principal de lubrification présente un point d'aspiration principal du fluide de lubrification situé dans le réservoir principal, une conduite d'aspiration principale reliant le point d'aspiration au générateur de débit principal.

De plus, le système de lubrification comporte un réservoir de secours rempli d'un fluide de lubrification. Le réservoir de secours comporte une entrée pour recevoir une partie du fluide de lubrification. En outre, une conduite de sortie relie le réservoir de secours à la conduite d'aspiration principale.

Les documents FR 2 658 577 A1, US 2020/271194 A1, EP 0 696 697 A1, EP 3 647 206 A1, et FR 2 798 983 A1 décrivent des systèmes ayant des pompes pour remplir des réservoirs.

La présente invention a alors pour objet de proposer un système mécanique innovant visant à éviter un barbotage d'éléments à lubrifier ou à refroidir en présence de fortes inclinaisons du système mécanique par rapport à une position initiale de repos.

La présente invention concerne alors un système mécanique comprenant un carter et au moins un élément à lubrifier ou à refroidir disposé dans le carter, voire plusieurs éléments à lubrifier ou à refroidir, le système mécanique comprenant un système fluidique lubrifiant muni d'un fluide lubrifiant et d'un réservoir disposé dans le carter.

Le réservoir est fuyant et situé au-dessus dudit au moins un élément à lubrifier ou à refroidir, le fluide lubrifiant s'échappant, en particulier naturellement et donc sans action extérieure, du réservoir par gravité pour atteindre ledit au moins un élément à lubrifier ou à refroidir, le système fluidique lubrifiant comprenant au moins un générateur de débit de relevage relié par au moins une conduite de remplissage au réservoir et à au moins un point d'aspiration présent dans un fond du carter, ledit générateur de débit de relevage étant configuré pour remplir le réservoir avec le fluide lubrifiant présent dans ledit fond au moins durant une phase de démarrage.

Le terme « fuyant » signifie que le fluide lubrifiant contenu dans une enceinte du réservoir s'en échappe en permanence sans action extérieure, à savoir sans solliciter une pompe ou une vanne par exemple. Le réservoir est à usage permanent au moins à l'issue de la phase de démarrage, à l'inverse d'un réservoir de secours à usage unique.

Le ou les éléments à lubrifier ou à refroidir peuvent comprendre des éléments qui doivent être lubrifiés et/ou refroidis. Au repos, ces éléments sont immobiles et sont éventuellement en mouvement en fonctionnement. De tels éléments peuvent comprendre des roues dentées, des pignons, des couronnes dentées, des organes de roulement, des organes de dispositif de réduction ou d'augmentation de vitesse de rotation...

Par suite, lorsque le système mécanique est au repos, le réservoir se vide au moins partiellement, voire totalement selon la réalisation, et automatiquement dans le fond du carter sous le seul effet de la gravité terrestre. A cet effet, le réservoir peut comprendre une enceinte non étanche, cette enceinte comprenant au moins un orifice de drainage non obturable. L'orifice de drainage peut être disposé au niveau d'un point bas du réservoir.

Le carter peut alors avoir une forme empêchant le ou les éléments à lubrifier ou à refroidir de baigner dans le fluide lubrifiant au repos, à savoir par exemple en présence d'une inclinaison relativement faible. Eventuellement, un élément à lubrifier ou à refroidir peut être atteint par le fluide lubrifiant, mais le système mécanique n'est pas confronté à un phénomène de barbotage puisque le système mécanique est à l'arrêt.

Durant une phase de démarrage, le système mécanique est éventuellement mis en mouvement. De plus, le générateur de débit de relevage est activé et transfert le fluide lubrifiant du fond du carter vers le réservoir. Le réservoir se remplit de fluide lubrifiant à mesure que le fond du carter se vide.

A l'issue de la phase de démarrage, le fond du carter du système mécanique contient alors peu voire quasiment pas de fluide lubrifiant. Le système mécanique est en mouvement. Le fluide lubrifiant est alors distribué par le réservoir vers le ou les éléments à lubrifier ou à refroidir au moins par gravité au travers d'un orifice de drainage et selon un débit de fuite éventuellement réduit.

Par suite, le fluide lubrifiant repose au repos au moins en partie dans le fond du carter, à l'instar d'un système mécanique à carter humide. En effet, le réservoir est en permanence fuyant. Le système fluidique ne contient aucun moyen pour l'empêcher de fuir au repos, tel qu'une vanne.

Durant une phase de fonctionnement, le fluide lubrifiant est transféré dans le réservoir situé en partie haute du système mécanique et s'écoule vers le ou les éléments à lubrifier ou à refroidir à partir du réservoir au moins par gravité. Le fluide lubrifiant qui retombe dans le fond du carter du système mécanique est en permanence réacheminé en utilisation dans le réservoir par un dispositif de transfert de fluide, ce dispositif de transfert de fluide pouvant comprendre le générateur de débit de relevage voire un autre générateur de débit. A l'instar d'un système à carter sec, le fond du carter ne contient alors pas un volume de fluide lubrifiant dans lequel un ou des éléments à lubrifier ou à refroidir peuvent être au moins partiellement immergés en présence de fortes inclinaisons du système mécanique. En particulier, au sein d'un aéronef, le fond du réservoir ne contient alors pas suffisamment de fluide lubrifiant dans lequel barbote un élément à lubrifier ou à refroidir, par exemple durant une manœuvre en piqué ou à cabrer au sein d'un aéronef.

Ainsi, le système mécanique n'est ni un système à carter sec ni un système à carter humide aux sens conventionnels, mais un système hybride innovant. Ce système mécanique peut subir de fortes inclinaisons sans être confronté à un phénomène néfaste de barbotage d'éléments à lubrifier ou à refroidir.

En outre, le réservoir se trouve de fait dans une partie haute du système mécanique, en étant agencé au-dessus du ou des éléments à lubrifier ou à refroidir. Le terme « au-dessus » est à considérer lorsque le système mécanique se trouve dans une position de repos prédéterminée, le point le plus bas du réservoir se situant dans un plan horizontal placé au-dessus du ou des éléments à lubrifier ou à refroidir pour que le fluide lubrifiant puisse atteindre le ou les éléments à lubrifier ou à refroidir uniquement sous l'effet de la gravité. En raison de cet agencement, le fluide lubrifiant peut tendre à moins s'échauffer, comparé un système à carter humide.

Le système mécanique peut de plus comporter une ou plusieurs des caractéristiques qui suivent.

Selon une possibilité, le réservoir peut être fuyant en présentant un débit de fuite inférieur à un débit d'alimentation en fluide lubrifiant dans la conduite de remplissage.

Durant la phase de démarrage, le réservoir se remplit ainsi avec le fluide contenu précédemment dans le fond du carter.

Selon une possibilité compatible avec les précédentes, le système mécanique peut être configuré pour être mobile dans un volume de déplacement prédéterminé par rapport à un référentiel de ce système mécanique, ledit carter comportant à l'issue de la phase de démarrage un volume de fluide lubrifiant inférieur à un volume prédéterminé permettant à au moins un élément à lubrifier ou à refroidir d'être au moins partiellement immergé, voire chaque élément à lubrifier ou à refroidir, lors d'un déplacement dudit système mécanique dans ledit volume de déplacement prédéterminé.

Le carter comporte à l'issue de la phase de démarrage un volume de fluide lubrifiant inférieur au volume présent dans le fond du carter au repos. Dès lors, le ou les éléments à lubrifier ou à refroidir ne sont pas soumis à un phénomène de barbotage lors du fonctionnement du système mécanique.

Selon l'invention, le système fluidique lubrifiant comporte au moins un circuit fluidique muni d'une pompe de distribution reliée au réservoir par une liaison hydraulique d'entrée, à savoir en aval de ce réservoir au regard d'un sens de circulation du fluide lubrifiant, le circuit fluidique ayant un réseau hydraulique de sortie comprenant au moins un circuit de distribution configuré pour éjecter ledit fluide lubrifiant vers au moins un élément à lubrifier ou à refroidir, la pompe de distribution étant reliée au réseau hydraulique de sortie et configurée pour prélever dans le réservoir le fluide lubrifiant et faire circuler ledit fluide lubrifiant de la liaison hydraulique d'entrée vers le réseau hydraulique de sortie. Ainsi le fluide lubrifiant est puisé dans le réservoir puis s'écoule dans la liaison hydraulique d'entrée puis dans le réseau hydraulique de sortie.

Dès lors, le système fluidique comprend un ou plusieurs circuits fluidiques pour alimenter en fluide lubrifiant, simultanément, conjointement ou l'un après l'autre, un ou plusieurs circuits de distribution.

Dans un mode de fonctionnement normal, au moins un circuit fluidique dirige le fluide lubrifiant vers le ou les éléments à lubrifier ou à refroidir. En parallèle, le réservoir fuit par au moins un orifice de drainage vers le ou les éléments à lubrifier ou à refroidir. En cas de fuite du circuit fluidique, le réservoir continue, immédiatement et sans activation d'un organe dédié, à diriger le fluide lubrifiant qu'il contient vers le ou les éléments à lubrifier ou à refroidir. Ainsi, ce système permet de garantir un temps de fonctionnement minimal après une panne, pour une durée découlant du volume du réservoir. Le réservoir et son débit de fuite peuvent être dimensionnés pour respecter des règlements existants voire pour atteindre des performances supérieures aux performances requises dans de tels règlements, par exemple pour atteindre un temps minimal de fonctionnement du système mécanique de 30 minutes voire plus en présence d'une fuite à l'extérieur du réservoir.

Plusieurs circuits fluidiques peuvent avoir au moins un circuit de distribution commun.

Eventuellement, le réservoir peut fuir vers un circuit de distribution. En effet, le réservoir peut comprendre un orifice de drainage relié par au moins une tuyauterie à un ou plusieurs circuits de distribution.

Selon une possibilité compatible avec les précédentes et pour au moins un circuit fluidique, ledit réservoir peut comporter une enceinte fuyante et au moins une nourrice disposée dans ladite enceinte, ladite nourrice étant configurée pour déborder dans l'enceinte et être remplie de fluide lubrifiant par l'enceinte à l'issue de la phase de démarrage, ladite liaison hydraulique d'entrée partant de ladite nourrice jusqu'à la pompe de distribution.

Dès lors, l'enceinte est fuyante pour présenter le débit de fuite évoqué précédemment et permettre au fluide lubrifiant de s'échapper du réservoir par gravité pour atteindre le ou les éléments à lubrifier ou à refroidir.

A l'inverse, au moins une nourrice est agencée dans l'enceinte. La nourrice comporte un contenant qui ne fuit pas, mais peut déborder dans l'enceinte.

Par suite, l'enceinte se vide au repos dans le fond du carter alors que la nourrice reste remplie de fluide lubrifiant. Durant la phase de démarrage, la nourrice alimente alors en fluide au moins un circuit fluidique, voire le générateur de débit de relevage.

Selon une possibilité compatible avec les précédentes et pour au moins un circuit fluidique, le réseau hydraulique de sortie peut comporter en amont dudit au moins un circuit de distribution un ou plusieurs des organes suivants : un refroidisseur, un réchauffeur, un filtre, une liaison de surpression débouchant dans ledit carter, un senseur de pression, un compteur de particules.

En présence de plusieurs circuits fluidiques tels qu'évoqués plus en détail par la suite, au moins un voire chaque circuit fluidique peut comprendre un ou plusieurs de ces organes.

Diverses possibilités compatibles les unes avec les autres et avec les précédentes peuvent permettre de réaliser un générateur de débit de relevage.

Selon une possibilité compatible avec les précédentes, ledit au moins un générateur de débit de relevage peut comporter au moins une pompe d'amorçage électromécanique reliée à au moins un point d'aspiration et au réservoir.

La pompe d'amorçage peut être éventuellement une pompe dédiée. La pompe d'amorçage est configurée pour transférer, seule ou en combinaison avec d'autres systèmes, le fluide lubrifiant du fond du carter vers le réservoir, éventuellement uniquement durant la phase de démarrage ou une phase de secours.

Une telle pompe d'amorçage peut, par exemple, notamment être mise en œuvre en l'absence de nourrice pour remplir le réservoir avant de mettre en mouvement le ou les éléments à lubrifier ou à refroidir.

Selon une possibilité compatible avec les précédentes, ledit au moins un générateur de débit de relevage peut comprendre un éjecteur ayant une sortie reliée hydrauliquement au réservoir, ledit éjecteur ayant une première entrée reliée hydrauliquement à au moins un point d'aspiration, par exemple via une conduite d'approvisionnement comprenant ledit au moins un point d'aspiration, ledit éjecteur ayant une deuxième entrée reliée hydrauliquement au réseau hydraulique de sortie.

Lors de la phase de démarrage, la pompe de distribution alimente le réseau hydraulique de sortie, éventuellement à partir d'une nourrice du réservoir, et l'éjecteur. Cet éjecteur puise alors le fluide lubrifiant dans le fond du carter pour remplir le réservoir. Une seule pompe permet alors de transférer le fluide lubrifiant du réservoir vers au moins un circuit de distribution et du fond du carter vers le réservoir.

Eventuellement, ledit réseau hydraulique de sortie peut comporter une restriction entre l'éjecteur et la pompe de distribution.

Une telle restriction peut être employée pour obtenir une pression prédéterminée dans l'éjecteur.

De manière complémentaire ou alternative, un générateur de débit de relevage peut comporter un éjecteur ayant une sortie reliée hydrauliquement au réservoir, ledit éjecteur ayant une première entrée reliée hydrauliquement à au moins un point d'aspiration éventuellement via une conduite d'approvisionnement comprenant ledit au moins un point d'aspiration, ledit éjecteur ayant une deuxième entrée reliée hydrauliquement à une pompe d'injection, ladite pompe d'injection étant reliée hydrauliquement au réservoir, à savoir à son enceinte ou à sa nourrice.

Dans ce cas, une pompe d'injection indépendante du circuit fluidique éventuel alimente un éjecteur qui achemine le fluide lubrifiant du fond du carter vers le réservoir.

Selon une possibilité compatible avec les précédentes et indépendamment de la nature du ou des générateurs de débit de r, le système fluidique lubrifiant peut comporter au moins deux circuits fluidiques débouchant sur au moins un circuit de distribution, chaque circuit fluidique étant pourvu de sa propre pompe de distribution reliée au réservoir par sa propre liaison hydraulique d'entrée et de son propre réseau hydraulique de sortie.

Plusieurs circuits fluidiques peuvent être prévus par sécurité.

Par exemple, lesdits deux circuits fluidiques peuvent comporter un circuit principal et un circuit de secours utilisable en cas de panne du circuit principal.

Selon une possibilité compatible avec les précédentes et indépendamment de la nature du ou des générateurs de débit de relevage, ledit au moins un générateur de débit de relevage peut comporter plusieurs générateurs de débit de relevage.

Par exemple, plusieurs générateurs de débit communiquent avec des points d'aspiration différents répartis dans le système mécanique, éventuellement dans des zones de rétention potentielles de fluide lubrifiant. Une telle architecture peut aussi être intéressante lorsque le système mécanique comporte plusieurs modules interfacés présentant des points bas locaux respectifs.

Par exemple, le système mécanique comporte alors plusieurs éjecteurs, éventuellement piqués sur un même réseau hydraulique Selon une possibilité, plusieurs éjecteurs formant des générateurs de débit de relevage peuvent avoir des caractéristiques différentes.

Par exemple, au moins un éjecteur peut avoir une géométrie pour fonctionner de manière optimale avec un faible débit de fluide lubrifiant, éventuellement pour être performant durant une phase de montée en régime au démarrage, et au moins un autre éjecteur peut avoir une géométrie pour fonctionner de manière optimale avec un fort débit de fluide lubrifiant, éventuellement atteint suite à la phase de montée en régime.

Outre un système mécanique, l'invention vise un aéronef muni d'une boîte de transmission de puissance mettant en mouvement un rotor, cette boîte de transmission de puissance étant un tel système mécanique.

Un exemple de réalisation non revendiqué concerne aussi un procédé de lubrification d'un système mécanique comprenant un carter et au moins un élément à lubrifier ou à refroidir disposés dans le carter, le système mécanique comprenant un système fluidique lubrifiant muni d'un fluide lubrifiant et d'un réservoir disposé dans le carter.

Ce procédé comporte les étapes suivantes :
i) durant une phase de démarrage, vidage d'un fond dudit carter en transférant ledit fluide lubrifiant au repos dans ledit fond vers un réservoir situé au-dessus dudit au moins un élément à lubrifier ou à refroidir, le ou les éléments à lubrifier ou à refroidir étant à l'arrêt ou en mouvement,
ii) durant une phase de fonctionnement, en particulier durant une phase de fonctionnement nominal sans panne et fuite indues, lubrification dudit au moins un élément à lubrifier ou à refroidir à partir du fluide lubrifiant contenu dans le réservoir, les éléments à lubrifier ou à refroidir étant en mouvement, et
iii) durant la phase de fonctionnement, transfert du fluide lubrifiant tombant par gravité dans le fond vers le réservoir.

L'invention et ses avantages apparaîtront avec plus de détails dans le cadre de la description qui suit avec des exemples donnés à titre illustratif en référence aux figures annexées qui représentent :
la figure 1, un schéma illustrant un système mécanique selon l'invention durant une phase de démarrage,
la figure 2, un schéma illustrant le système mécanique de la figure 1 durant une phase de fonctionnement nominale,
la figure 3, un schéma illustrant un système mécanique selon l'invention durant une phase de démarrage,
la figure 4, un schéma illustrant un système mécanique selon l'invention durant une phase de démarrage,
la figure 5, un schéma illustrant le système mécanique de la figure 4 durant une phase de fonctionnement nominale, et
la figure 6, un schéma illustrant le système mécanique muni de plusieurs générateurs de débit de relevage.

Les éléments présents dans plusieurs figures distinctes sont affectés d'une seule et même référence.

Trois directions X, Y et Z orthogonales les unes par rapport aux autres sont représentées sur les figures. La première direction X est dite longitudinale. La deuxième direction Y est dite transversale. Enfin, la troisième direction Z est dite en élévation.

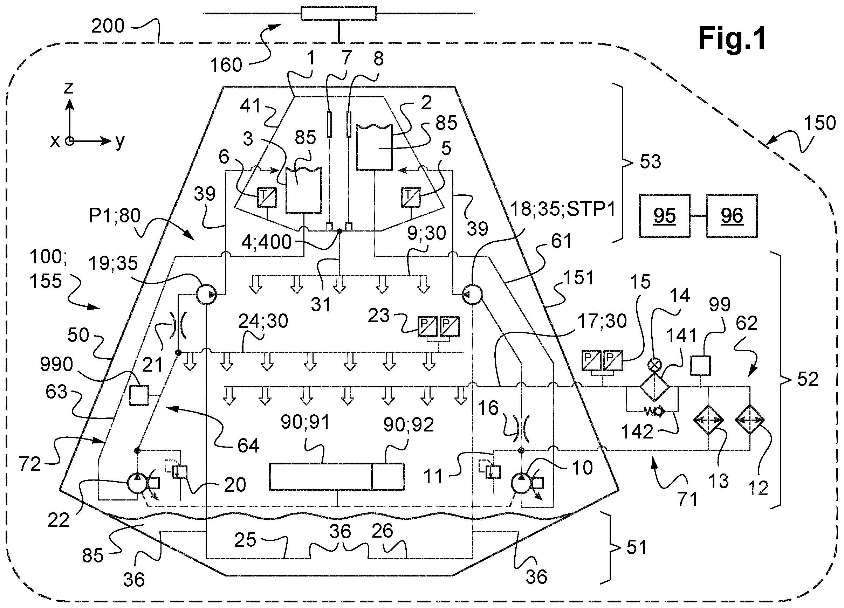

Les figures 1 à 5 illustrent des systèmes mécaniques 100.

Quelle que soit la réalisation et en référence par exemple à la figure 1, le système mécanique 100 comporte un carter 50. Le carter 50 s'étend en élévation d'un fond 51 vers une partie haute 53 en passant par une partie intermédiaire 52.

De plus, le système mécanique 100 est muni d'au moins un élément 90 à lubrifier ou à refroidir logé dans la partie intermédiaire 52 du carter 50. Ainsi, le système mécanique 100 peut comporter une pluralité d'éléments 91, 92 à lubrifier ou à refroidir. Le ou des éléments 90 peuvent être mobiles lorsque le système mécanique 100 est en fonctionnement. Selon des exemples, un élément 90 peut comprendre des éléments mobiles voire tournants, tels que des arbres et des roulements, ainsi que des éléments de transmission de puissance et de réduction ou d'augmentation de vitesse, tels que des organes d'engrenages.

Par ailleurs, ce système mécanique 100 peut être déplaçable en utilisation par rapport à un référentiel X, Y, Z attaché à ce système mécanique 100, au sein d'un volume 200 de déplacement. Par exemple, le système mécanique 100 est mobile en rotation autour deux axes parallèles aux axes X, Y dans les limites du volume 200 de déplacement.

Eventuellement, le système mécanique 100 peut être une boîte de transmission de puissance 155 d'un aéronef 150 mettant en rotation au moins un rotor 160. Ce système mécanique 100 peut alors fonctionner avec des angles à cabrer et à piquer prédéterminés.

Par ailleurs, le système mécanique 100 comprend un système fluidique lubrifiant 80 muni d'un fluide lubrifiant 85 pour lubrifier et/ou refroidir chaque élément 90. Par exemple, le fluide lubrifiant 85 comporte de l'huile.

Ce système fluidique lubrifiant 80 est ainsi muni d'un réservoir 1 disposé dans le carter 50. Le réservoir 1 est agencé au-dessus du ou des éléments 90, à savoir dans la partie haute 53 du carter 50. Le terme « au-dessus » est par exemple à considérer lorsque le système mécanique 100 est à l'arrêt, voire est agencé sur un support qui repose sur le sol dans une position prédéterminée, éventuellement au sein d'un aéronef posé sur une aire d'atterrissage.

Le réservoir 1 peut comprendre une enceinte 41 apte à accueillir une partie du fluide lubrifiant 85 en fonctionnement. Cette enceinte 41 peut avoir une forme annulaire, par exemple pour être traversée par un arbre du système mécanique 100. L'enceinte peut être attachée au carter. Le réservoir 1 peut en outre comporter au moins une nourrice 2, 3 disposée dans l'enceinte 41, la nourrice 2, 3 pouvant déborder dans l'enceinte 41 et être remplie en fluide lubrifiant 85 par l'enceinte 41. Ainsi, la nourrice est un récipient ouvert, par exemple à son sommet, disposé dans le volume délimité par l'enceinte.

De plus, le réservoir 1 est fuyant. A cet effet, l'enceinte 41 peut comprendre au moins un orifice de drainage 4, par exemple au niveau d'un point bas 400 de l'enceinte 41. Dès lors, le fluide lubrifiant 85 s'échappe seul, à savoir sans action d'un autre organe, du réservoir 1 et en particulier de l'enceinte 41 par gravité pour atteindre le ou les éléments 90 à lubrifier ou à refroidir.

Par exemple, le ou les orifices de drainage 4 sont reliés par une ou des conduites de drainage 31 à un ou des circuits de distribution 30. Un tel circuit de distribution 30 peut comprendre une rampe de distribution munie d'au moins un projeteur de fluide, tel qu'un simple orifice, un gicleur ou autres. Eventuellement, le ou les orifices de drainage 4 sont reliés selon la possibilité illustrée par une ou des conduites de drainage 31 à un circuit de distribution 9 dédié, ou peuvent être reliées à au moins un circuit de distribution partagé.

En effet, pour acheminer le fluide lubrifiant 85 du réservoir 1 vers le ou les éléments 90 à lubrifier ou à refroidir, le système fluidique lubrifiant 80 peut comprendre au moins un autre circuit fluidique.

Ainsi, le système fluidique lubrifiant 80 peut comporter au moins un circuit fluidique 71, 72 muni d'une pompe de distribution 10, 22.

La pompe de distribution 10, 22 d'un circuit fluidique 71, 72 peut être par exemple une pompe mécanique mise en mouvement par au moins un élément 90 du système mécanique 100. Ainsi, tant que le système mécanique 100 n'est pas en fonctionnement, la pompe mécanique 10, 22 est inactive. Une pompe électromécanique est aussi envisageable.

La pompe de distribution 10, 22 d'un circuit fluidique 71, 72 est reliée fluidiquement au réservoir 1 par une liaison hydraulique d'entrée 61, 63 du circuit fluidique 71, 72. Une liaison 59 hydraulique d'entrée 61, 63 peut comprendre un ou plusieurs tuyaux, voire une vanne ou un équivalent.

En outre, la pompe de distribution 10, 22 d'un circuit fluidique 71, 72 est reliée fluidiquement à un réseau hydraulique de sortie 62, 64 de ce circuit fluidique 71, 72. Un tel réseau hydraulique de sortie 62, 64 comprend au moins un circuit de distribution 30 configuré pour transférer le fluide lubrifiant 85 vers au moins un élément 90 à lubrifier ou à refroidir. Dès lors, la pompe de distribution 10, 22 est configurée pour prélever dans le réservoir 1 le fluide lubrifiant 85 et faire circuler ce fluide lubrifiant 85 de la liaison hydraulique d'entrée 61, 63 vers le réseau hydraulique de sortie 62, 64.

Deux circuits fluidiques 71, 72 peuvent avoir un même circuit de distribution 30 ou des circuits de distribution 17, 24 distincts conformément aux exemples illustrés. La référence 30 est utilisé pour désigner un circuit de distribution de manière générale, les référence 9, 17, 24 désignant des circuits de distribution particuliers.

Selon une autre caractéristique, en présence d'au moins deux circuits fluidiques 71, 72, chaque circuit fluidique 71, 72 peut avoir d'une part sa propre pompe de distribution 10, 22 reliée au réservoir 1 par sa propre liaison hydraulique d'entrée 61, 63 et, d'autre part, son propre réseau hydraulique de sortie 62, 64.

Selon une autre caractéristique, en présence d'au moins deux circuits fluidiques 71, 72, les deux circuits fluidiques 71, 72 peuvent former un circuit principal 71 et un circuit de secours 72 utilisable en cas de panne du circuit principal 71.

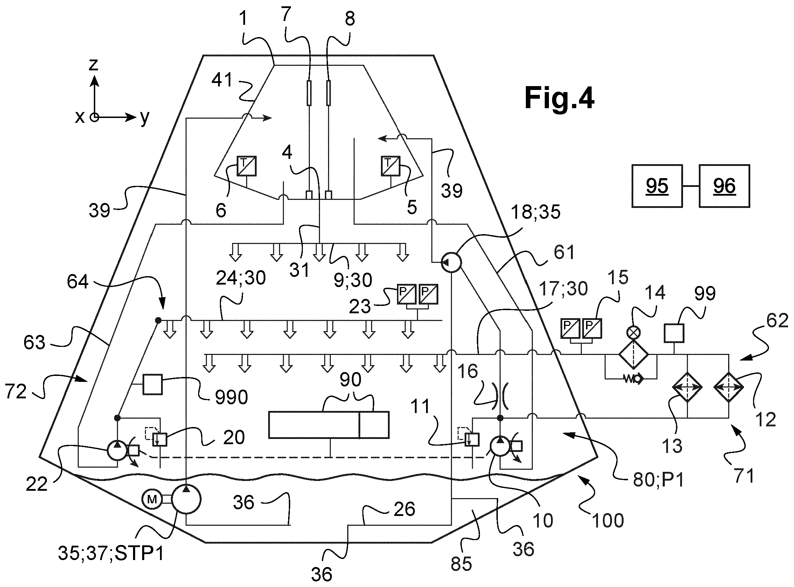

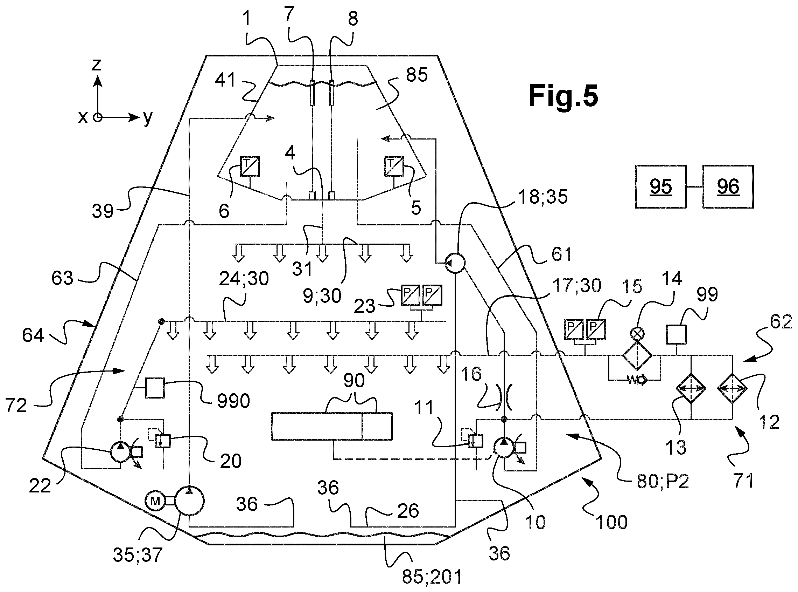

Selon une autre caractéristique, la pompe de distribution 10, 22 d'un circuit fluidique 71,72 peut selon la réalisation être reliée à l'enceinte 41 du réservoir 1 selon l'exemple des figures 4 et 5.

Alternativement, la pompe de distribution 10, 22 d'un circuit fluidique 71, 72 peut être reliée à une nourrice 2, 3 du réservoir 1 selon les exemples des figures 1, 2 et 3. Dans ce cas, au moins une nourrice 2, 3, voire au moins une nourrice 2, 3 par circuit fluidique 71,7 2, est disposée dans l'enceinte 41. Dès lors, la liaison hydraulique d'entrée 61, 63 s'étend d'une nourrice 2, 3 jusqu'à une pompe de distribution 10, 22.

En présence d'un circuit principal 71 et d'un circuit de secours 72 coopérant avec deux nourrices 2, 3 respectives, la nourrice 3 reliée au circuit de secours 72 peut être par sécurité plus proche d'un point bas du réservoir 1 que la nourrice 2 reliée au circuit principal 71. Une fuite présente dans un secteur supérieur de l'enceinte 41 n'impacte alors pas la nourrice 3 reliée au circuit de secours 72.

Selon une autre caractéristique, le réseau hydraulique de sortie 62, 64 d'un circuit fluidique 71, 72 peut comporter, en amont du ou des circuits de distribution 17, 24 de ce circuit fluidique 71, 72, un ou plusieurs des organes suivants : un refroidisseur 12, un réchauffeur 13, un filtre 14, une liaison de surpression 11, 20 débouchant dans le carter 50, un senseur de pression 15, 23, un compteur de particules 99, 990. Un filtre 14 peut comprendre un organe de filtrage 141 et une liaison de dérivation 142, voire un détecteur de colmatage. Une liaison de surpression peut comprendre un clapet de surpression débouchant sur le fond du carter, voire au moins un tuyau. Un compteur de particules peut comprendre un senseur de particules usuel utilisé pour compter voire capter des particules circulant le fluide, et par exemple un compteur optique ou par induction. Eventuellement, un compteur de particules peut être agencé en amont d'un filtre.

Selon les exemples donnés, un circuit fluidique principal 71 comporte un refroidisseur 12, un réchauffeur 13, un filtre 14, une liaison de surpression 11 débouchant dans le carter 50, un senseur de pression 15. Par exemple, le réseau hydraulique de sortie 62 du circuit fluidique principal 71 comporte une première liaison hydraulique sortant de la pompe de distribution 10. Cette première liaison hydraulique débouche, au niveau d'une jonction, sur la liaison de surpression 11 et une deuxième liaison hydraulique qui sort du carter pour atteindre le refroidisseur 12 et le réchauffeur 13. Une troisième liaison hydraulique relie le refroidisseur 12 et le réchauffeur 13 à un filtre 14, la troisième liaison pouvant comprendre un compteur de particules 99 éventuel. Ce filtre 14 débouche via une liaison retournant dans le carter sur un circuit de distribution 17 équipé d'un senseur de pression 15. En outre, un circuit fluidique de secours 72 comporte une liaison de surpression 20 débouchant dans le carter 50 et un senseur de pression 23.

Une vanne peut être agencée dans le carter en amont du réchauffeur et du refroidisseur.

Par exemple, le réseau hydraulique de sortie 64 du circuit fluidique de secours 72 comporte une première liaison hydraulique sortant de la pompe de distribution 22. Cette première liaison hydraulique débouche, au niveau d'une jonction, sur la liaison de surpression 20 et une deuxième liaison hydraulique qui atteint un circuit de distribution 24 équipé d'un senseur de pression 23. La deuxième liaison hydraulique peut comprendre un compteur de particules 990 Le circuit fluidique de secours 72 est dépourvu de filtre, de réchauffeur et de refroidisseur pour limiter les risques de fuites.

Selon un autre aspect, le réservoir 1 peut loger au moins un senseur de niveau de fluide lubrifiant 7, 8, voire au moins un senseur de température 5, 6.

Le terme « senseur » désigne un capteur physique capable de mesurer directement le paramètre en question mais aussi un système pouvant comprendre un ou plusieurs capteurs physiques ainsi que des moyens de traitement du signal permettant de fournir une estimation du paramètre à partir des mesures fournies par ces capteurs physiques.

Les divers senseurs 5, 6, 7, 8, 15, 23 précités peuvent communiquer avec un contrôleur 95.

Le contrôleur 95 peut comprendre par exemple au moins un processeur et au moins une mémoire, au moins un circuit intégré, au moins un système programmable, au moins un circuit logique, ces exemples ne limitant pas la portée donnée à l'expression « contrôleur ». Le terme processeur peut désigner aussi bien une unité centrale de traitement connue sous l'acronyme CPU, une unité graphique de traitement GPU, une unité digitale connue sous l'acronyme DSP, un microcontrôleur...

Le contrôleur 95 peut notamment être configuré pour générer un signal d'alerte transmis à un alerteur 96 apte à générer au moins une alerte. Chaque alerte peut prendre la forme d'une alarme visuelle, par exemple par le biais de l'émission d'une lumière avec une diode électroluminescente ou un équivalent ou de l'affichage sur un écran d'un ou plusieurs caractères, d'une alarme sonore, par le biais d'un haut-parleur, et/ou d'une alarme haptique, par exemple à l'aide d'une unité vibrante faisant vibrer un organe tenu ou porté par un individu. Par exemple, une alerte peut être générée lorsqu'un senseur de pression 15, 23 délivre un signal porteur d'une pression inférieure à un seuil, lorsqu'un senseur de température 5, 6 mesure une température supérieure à un seuil, lorsqu'un senseur de niveau de fluide lubrifiant 7, 8 mesure un niveau inférieure à un seuil.

Indépendamment des exemples précédents et en référence à la figure 1, le système fluidique lubrifiant 80 comprend au moins un générateur de débit de relevage 35. Le générateur de débit de relevage 35 est relié par au moins une conduite de remplissage 39 au réservoir 1 et à au moins un point d'aspiration 36 présent dans le fond 51 du carter 50.

Le générateur de débit de relevage 35 est configuré pour remplir le réservoir 1 avec le fluide lubrifiant 85 présent dans le fond 51 au moins durant une phase de démarrage P1. Le réservoir 1 peut alors fuir en présentant un débit de fuite inférieur à un débit d'alimentation en fluide lubrifiant 85 dans la conduite de remplissage 39.

Eventuellement, un générateur de débit de relevage 35 peut comprendre un éjecteur 18, 19 relié par une conduite de remplissage 39 respective au réservoir 1 et à au moins un point d'aspiration 36 éventuellement via une conduite d'approvisionnement 25, 26.

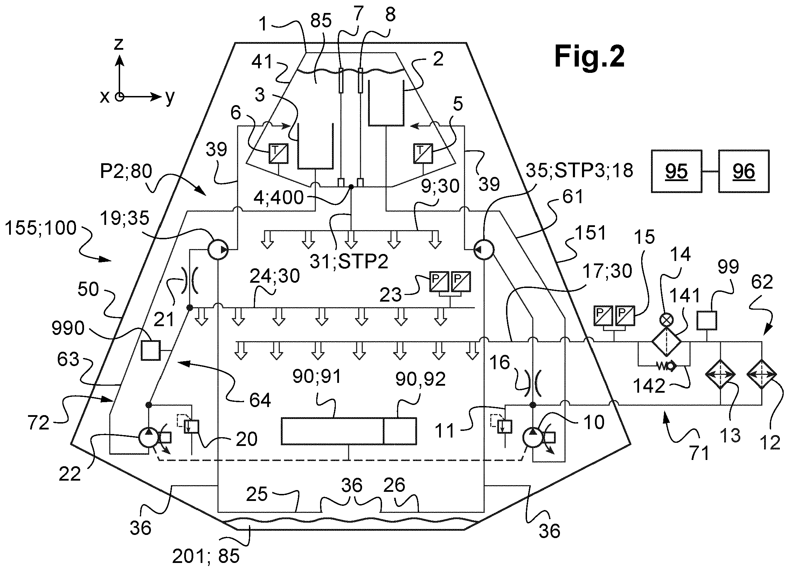

Selon la première réalisation des figures 1 et 2, cet éjecteur 18, 19 est aussi alimenté en fluide lubrifiant par le réseau hydraulique de sortie 62, 64 d'un circuit fluidique. Ainsi, un éjecteur 18, 19 a une sortie reliée hydrauliquement au réservoir 1 voire à une nourrice 2,3 par une conduite de remplissage 39. Cet éjecteur 18,19 a de plus une première entrée reliée hydrauliquement à une conduite d'approvisionnement 25, 26 et une deuxième entrée reliée hydrauliquement au réseau hydraulique de sortie 62, 64.

Eventuellement, le réseau hydraulique de sortie 62, 64 comporte une restriction 16, 21 entre l'éjecteur 18, 19 et la pompe de distribution 10, 22.

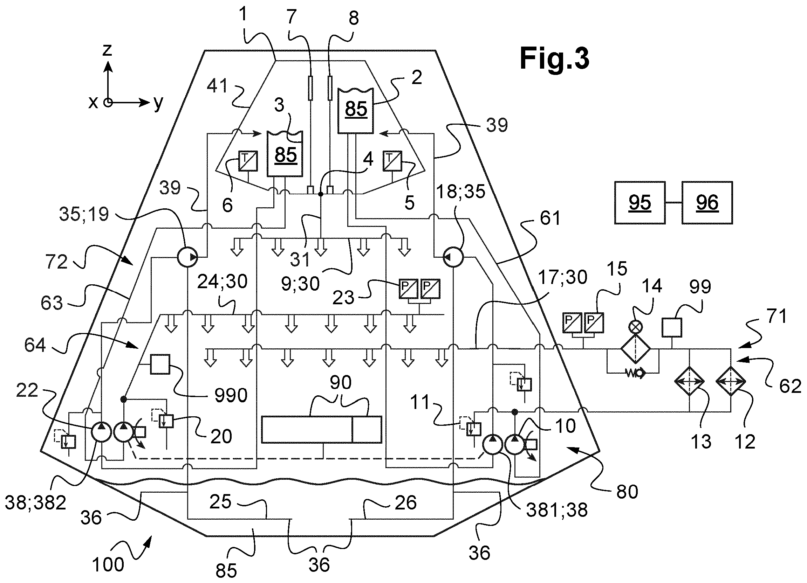

Selon la deuxième réalisation de la figure 3, cet éjecteur 18, 19 est indépendant en étant alimenté par une pompe d'injection 381, 382 dédiée, la pompe d'injection 381, 382 étant reliée à une nourrice 2,3. La pompe d'injection 381,382 peut être une pompe mécanique éventuellement mise en mouvement par le système mécanique 100, ou une pompe électromécanique.

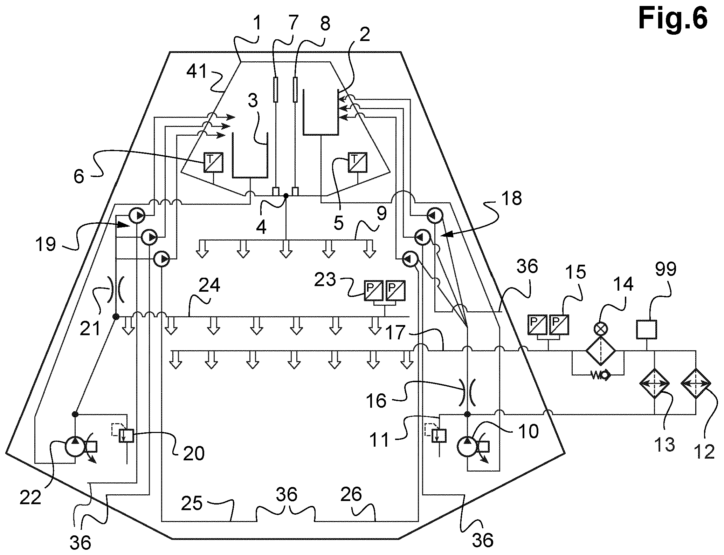

La figure 6 illustre un système mécanique muni de plusieurs générateurs de débit de relevage. Le cas échéant, plusieurs générateurs de débit de relevage peuvent prendre la forme d'éjecteurs communiquant éventuellement avec la même pompe. Le cas échéant, plusieurs générateurs de débit de relevage peuvent aboutir sur des points d'aspiration différents. Selon l'exemple illustré, le circuit principal 71 comporte plusieurs générateurs de débit de relevage 18 de type éjecteur reliés hydrauliquement chacun au réservoir 1 voire à une même nourrice 2 par une conduite de remplissage 39, à une conduite d'approvisionnement et au même réseau hydraulique de sortie 62. De même, le circuit de secours 72 comporte plusieurs générateurs de débit de relevage de type éjecteur reliés hydrauliquement chacun au réservoir 1 voire à une même nourrice 3 par une conduite de remplissage 39, à une conduite d'approvisionnement et au même réseau hydraulique de sortie 64.

Indépendamment du nombre de générateurs de débit de relevage, la première réalisation et la deuxième réalisation fonctionnent de manière identique. Quelle que soit la manière d'approvisionner en fluide lubrifiant un éjecteur 18,19 d'un générateur de débit de relevage 35 et en référence à la figure 1, au repos l'enceinte 41 est vide. Chaque nourrice 2, 3 contient une partie du fluide lubrifiant 85. Une autre partie du fluide lubrifiant est stockée dans le fond 51 du carter 50 du système mécanique 100.

Durant une phase de démarrage P1, le système fluidique lubrifiant 80 met en œuvre une étape de vidage STP1 du fond 51 en transférant le fluide lubrifiant 85 au repos dans ce fond 51 vers le réservoir 1.

En effet, le système mécanique 100 est mis en mouvement, par une motorisation non illustrée ne faisant pas l'objet de l'invention. Dès lors, chaque pompe de distribution 10, 22 ou d'injection 381,382 selon la réalisation est mise en mouvement. Chaque pompe de distribution 10, 22 puise alors le fluide lubrifiant contenu dans la nourrice 2, 3 respective. Chaque pompe de distribution 10,22 ou d'injection 381,382 selon la réalisation achemine alors le fluide prélevé dans le réservoir 1 vers à la fois un circuit de distribution 17,24 et au moins un éjecteur 18, 19 formant un générateur de débit de relevage 35. En conséquence, cet éjecteur 18,19 aspire le fluide lubrifiant contenu dans le fond 51 et l'achemine dans le réservoir 1.

En référence à la figure 2, durant une phase de fonctionnement P2, le système fluidique lubrifiant 80 met en œuvre une étape de lubrification STP2 du ou des éléments 90 à lubrifier ou à refroidir à partir du fluide lubrifiant 85 contenu dans le réservoir 1. En effet, le fluide lubrifiant 85 s'échappe du réservoir 1 et lubrifie le ou les éléments 90. De plus, chaque pompe de distribution 10,22 puise le fluide lubrifiant 85 dans le réservoir 1 et le transfère vers au moins un circuit de distribution 17,24.

De plus, le fluide lubrifiant 85 acheminé sur le ou les éléments 90 tombe par gravité dans le fond 51 du carter 50. Chaque éjecteur 18, 19 permet d'effectuer une étape de transfert STP3 du fluide lubrifiant 85 tombant par gravité dans le fond 51 vers le réservoir 1.

Si un circuit fluidique 71,72 tombe en panne, le ou les éléments 90 sont lubrifiés au moins par le réservoir 1 pendant une durée minimale.

Par ailleurs, le carter 50 comporte à l'issue de la phase de démarrage P1 un volume 201 de fluide lubrifiant 85 inférieur à un volume prédéterminé permettant au fluide lubrifiant 85 de faire barboter au moins un élément 90 à lubrifier ou à refroidir, dans les limites de déplacement autorisé du système mécanique 100.

Selon les réalisations des figures 4 à 5, un générateur de débit de relevage 35 peut comprendre au moins une pompe d'amorçage électromécanique 37 reliée à au moins un point d'aspiration 36 et à l'enceinte 41 du réservoir 1. Le réservoir 1 peut alors être dépourvu de nourrice. En outre, au moins un circuit fluidique 71,72 peut comporter un générateur de débit de relevage 35 de type éjecteur 18. Cet éjecteur 18 a une sortie reliée hydrauliquement au réservoir 1, une première entrée reliée hydrauliquement à au moins un point d'aspiration 36 éventuellement via une conduite d'approvisionnement 25 , et une deuxième entrée reliée hydrauliquement à une pompe de distribution 10,22 selon l'exemple illustré ou une pompe d'injection 381,382 dédiée reliée à l'enceinte 41 du réservoir 1.

Au repos, l'enceinte 41 est vide, ou quasiment vide.

Durant la phase de démarrage P1 illustrée sur la figure 4, le système fluidique lubrifiant 80 met en œuvre l'étape de vidage STP1 du fond 51 en transférant le fluide lubrifiant 85 au repos dans ce fond 51 vers l'enceinte 41. Chaque pompe d'amorçage électromécanique 37 est mise en mouvement, par exemple sur ordre du contrôleur 95, pour puiser le fluide lubrifiant 85 dans le fond 51 du carter 50 et l'injecter dans le réservoir 1.

Le système mécanique 100 peut rester à l'arrêt.

En référence à la figure 5, durant une phase de fonctionnement P2, le système mécanique 100 est mis en mouvement. Le système fluidique lubrifiant 80 met en œuvre une étape de lubrification STP2 du ou des éléments 90 à lubrifier ou à refroidir à partir du fluide lubrifiant 85 contenu dans le réservoir 1. En effet, le fluide lubrifiant 85 s'échappe du réservoir 1 et lubrifie le ou les éléments 90. De plus, chaque pompe de distribution 10, 22 puise le fluide lubrifiant 85 dans le réservoir 1 et le transfère vers au moins un circuit de distribution 17,24.

De plus, le fluide lubrifiant 85 acheminé sur le ou les éléments 90 tombe par gravité dans le fond 51 du carter 50. Chaque éjecteur 18,19 permet d'effectuer une étape de transfert STP3 du fluide lubrifiant 85 tombé par gravité dans le fond 51 vers le réservoir 1.

Si un circuit fluidique 71,72 tombe en panne, le ou les éléments 90 sont lubrifiés au moins par le fluide lubrifiant 85 contenu dans le réservoir 1 pendant une durée minimale.

Par ailleurs, le carter 50 comporte à l'issue de la phase de démarrage P1 un volume 201 de fluide lubrifiant 85 inférieur à un volume prédéterminé permettant au fluide lubrifiant 85 de faire barboter au moins un élément 90 à lubrifier ou à refroidir, dans les limites de déplacement autorisé du système mécanique 100. Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre des revendications ci-après.

Par exemple, une pompe d'amorçage peut équiper les réalisations des figures 1 à 3. Selon un autre exemple, les réalisations des figures 3 à 6 peuvent comprendre plusieurs générateurs de débit de relevage à l'instar de l'enseignement de la figure 6.

## Revendications

1. Système mécanique (100) comprenant un carter (50) et au moins un élément (90) à lubrifier ou à refroidir disposé dans le carter (50), le système mécanique (100) comprenant un système fluidique lubrifiant (80) muni d'un fluide lubrifiant (85) et d'un réservoir (1) disposé dans le carter (50), le réservoir (1) étant fuyant et situé au-dessus dudit au moins un élément (90) à lubrifier ou à refroidir, le fluide lubrifiant (85) s'échappant du réservoir (1) par gravité pour atteindre ledit au moins un élément (90) à lubrifier ou à refroidir, le système fluidique lubrifiant (80) comprenant au moins un générateur de débit de relevage (35) relié par au moins une conduite de remplissage (39) au réservoir (1) et à au moins un point d'aspiration (36) présent dans un fond (51) du carter (50), ledit générateur de débit de relevage (35) étant configuré pour remplir le réservoir (1) avec le fluide lubrifiant (85) présent dans ledit fond (51) au moins durant une phase de démarrage (P1)
**caractérisé en ce que** ledit système fluidique lubrifiant (80) comporte au moins un circuit fluidique (71, 72) muni d'une pompe de distribution (10, 22) reliée au réservoir (1) par une liaison hydraulique d'entrée (61, 63), le circuit fluidique (71, 72) ayant un réseau hydraulique de sortie (62, 64) comprenant au moins un circuit de distribution (30) configuré pour éjecter ledit fluide lubrifiant (85) vers ledit au moins un élément (90) à lubrifier ou à refroidir, la pompe de distribution (10, 22) étant reliée au réseau hydraulique de sortie (62, 64) et configurée pour prélever dans le réservoir (1) le fluide lubrifiant (85) et faire circuler ledit fluide lubrifiant (85) de la liaison hydraulique d'entrée (61, 63) vers le réseau hydraulique de sortie (62, 64).

2. Système mécanique selon la revendication 1,
**caractérisé en ce que** ledit réservoir (1) est fuyant en présentant un débit de fuite inférieur à un débit d'alimentation en fluide lubrifiant (85) dans la conduite de remplissage (39).

3. Système mécanique selon l'une quelconque des revendications 1 à 2,
**caractérisé en ce que** le système mécanique (100) est configuré pour être mobile dans un volume (200) de déplacement prédéterminé par rapport à un référentiel de ce système mécanique, ledit carter (50) comportant à l'issue de la phase de démarrage (P1) un volume (201) de fluide lubrifiant inférieur à un volume prédéterminé permettant à au moins un élément (90) à lubrifier ou à refroidir d'être au moins partiellement immergé lors d'un déplacement dudit système mécanique (100) dans ledit volume (200) de déplacement prédéterminé.

4. Système mécanique selon l'une quelconque des revendications 1 à 3,
**caractérisé en ce que** ledit réservoir (1) comporte une enceinte (41) fuyante et au moins une nourrice (2, 3) disposée dans ladite enceinte (41), ladite nourrice (2, 3) étant configurée pour déborder dans l'enceinte (41) et être remplie de fluide lubrifiant (85) par l'enceinte (41) à l'issue de la phase de démarrage (P1), ladite liaison hydraulique d'entrée (61, 63) partant de ladite nourrice (2, 3) jusqu'à la pompe de distribution (10, 22).

5. Système mécanique selon l'une quelconque des revendications 1 à 4,
**caractérisé en ce que** le réseau hydraulique de sortie (62, 64) comporte en amont dudit au moins un circuit de distribution (17, 24) un ou plusieurs des organes suivants : un refroidisseur (12), un réchauffeur (13), un filtre (14), une liaison de surpression (11, 20) débouchant dans ledit carter (50), un senseur de pression (15, 23), un compteur de particules (99, 990).

6. Système mécanique selon l'une quelconque des revendications 1 à 5,
**caractérisé en ce que** ledit au moins un générateur de débit de relevage (35) comporte au moins une pompe d'amorçage électromécanique (37) reliée à au moins un point d'aspiration (36) et au réservoir (1).

7. Système mécanique selon l'une quelconque des revendications 1 à 6,
**caractérisé en ce que** ledit au moins un générateur de débit de relevage (35) comprend un éjecteur (18, 19) ayant une sortie reliée hydrauliquement au réservoir (1), ledit éjecteur (18,19) ayant une première entrée reliée hydrauliquement à au moins un point d'aspiration (36), ledit éjecteur (18,19) ayant une deuxième entrée reliée hydrauliquement au réseau hydraulique de sortie (62, 64).

8. Système mécanique selon la revendication 7,
**caractérisé en ce que** ledit réseau hydraulique de sortie (62, 64) comporte une restriction (16, 21) entre l'éjecteur (18, 19) et la pompe de distribution (10, 22).

9. Système mécanique selon l'une quelconque des revendications 1 à 8,
**caractérisé en ce que** ledit système fluidique lubrifiant (80) comporte au moins deux circuits fluidiques (71, 72) débouchant sur au moins un circuit de distribution (16, 24), chaque circuit fluidique (71, 72) étant pourvu de sa propre pompe de distribution (10, 22) reliée au réservoir (1) par sa propre liaison hydraulique d'entrée (61, 63) et de son propre réseau hydraulique de sortie (62, 64).

10. Système mécanique selon la revendication 9,
**caractérisé en ce que** lesdits deux circuits fluidiques (71, 72) comportent un circuit principal (71) et un circuit de secours (72) utilisable en cas de panne du circuit principal (71).

11. Système mécanique selon l'une quelconque des revendications 1 à 10,
**caractérisé en ce que** ledit générateur de débit de relevage (35) comporte un éjecteur (18, 19) ayant une sortie reliée hydrauliquement au réservoir (1), ledit éjecteur (18,19) ayant une première entrée reliée hydrauliquement à au moins un point d'aspiration (36), ledit éjecteur (18,19) ayant une deuxième entrée reliée hydrauliquement à une pompe d'injection (381, 382), ladite pompe d'injection (381, 382) étant reliée hydrauliquement au réservoir (1).

12. Système mécanique selon l'une quelconque des revendications 1 à 11,
**caractérisé en ce que** ledit au moins un générateur de débit de relevage (35) comporte plusieurs générateurs de débit de relevage.

13. Aéronef (150) muni d'une boîte de transmission de puissance (155) mettant en mouvement un rotor (160),
**caractérisé en ce que** ladite boîte de transmission de puissance (150) est un système mécanique (100) selon l'une quelconque des revendications 1 à 12.

## Patentansprüche

1. Mechanisches System (100) mit einem Gehäuse (50) und mindestens einem in dem Gehäuse (50) angeordneten zu schmierenden oder zu kühlenden Element (90), wobei das mechanische System (100) ein Schmierfluidsystem (80) mit einem Schmierfluid (85) und einem im Gehäuse (50) angeordneten Behälter (1) umfasst, wobei der Behälter (1) undicht ist und sich über dem mindestens einen zu schmierenden oder zu kühlenden Element (90) befindet, wobei das Schmierfluid (85) durch Schwerkraft aus dem Behälter (1) austritt, um das mindestens eine zu schmierende oder zu kühlende Element (90) zu erreichen, wobei das Schmierfluidsystem (80) mindestens einen Förderstromgenerator (35) umfasst, der über mindestens eine Füllleitung (39) mit dem Behälter (1) und mindestens einer Ansaugstelle (36) an einem Boden (51) des Gehäuses (50) verbunden ist, wobei der Förderstromgenerator (35) konfiguriert ist, um zumindest während einer Startphase (P1) den Behälter (1) mit dem an dem Boden (51) vorhandenen Schmierfluid (85) zu füllen,
**dadurch gekennzeichnet, dass** das Schmierfluidsystem (80) mindestens einen Fluidkreis (71, 72) mit einer Verteilerpumpe (10, 22) umfasst, die über eine hydraulische Einlassverbindung (61, 63) mit dem Behälter (1) verbunden ist, dass der Fluidkreis (71, 72) ein hydraulisches Auslassnetzwerk (62, 64) aufweist, das mindestens einen Verteilerkreis (30) umfasst, der konfiguriert ist, um das Schmierfluid (85) an das mindestens eine zu schmierende oder zu kühlende Element (90) abzugeben, und dass die Verteilerpumpe (10, 22) mit dem hydraulischen Auslassnetzwerk (62, 64) verbunden und konfiguriert ist, um das Schmierfluid (85) aus dem Behälter (1) zu entnehmen und das Schmierfluid (85) von der hydraulischen Einlassverbindung (61, 63) zum hydraulischen Auslassnetzwerk (62, 64) zu leiten.

2. Mechanisches System nach Anspruch 1,
**dadurch gekennzeichnet, dass** der undichte Behälter (1) eine Leckrate aufweist, die geringer ist als eine Zufuhrrate des Schmierfluids (85) in die Füllleitung (39).

3. Mechanisches System nach einem der Ansprüche 1 bis 2,
**dadurch gekennzeichnet, dass** das mechanische System (100) konfiguriert ist, um in einem vorgegebenen Bewegungsvolumen (200) relativ zu einem Bezugssystem dieses mechanischen Systems beweglich zu sein, wobei das Gehäuse (50) am Ende der Startphase (P1) ein Volumen (201) an Schmierfluid aufweist, das kleiner ist als ein vorgegebenes Volumen, das es mindestens einem zu schmierenden oder zu kühlenden Element (90) ermöglicht, bei einer Bewegung des mechanischen Systems (100) in dem vorgegebenen Bewegungsvolumen (200) mindestens teilweise eingetaucht zu sein.

4. Mechanisches System nach einem der Ansprüche 1 bis 3,
**dadurch gekennzeichnet, dass** der Behälter (1) eine undichte Umhüllung (41) und mindestens einen in der Umhüllung (41) angeordneten Vorratsbehälter (2, 3) umfasst, wobei der Vorratsbehälter (2, 3) konfiguriert ist, um in die Umhüllung (41) überzulaufen und nach der Startphase (P1) über die Umhüllung (41) mit Schmierfluid (85) gefüllt zu werden.

5. Mechanisches System nach einem der Ansprüche 1 bis 4,
**dadurch gekennzeichnet, dass** das hydraulische Auslassnetzwerk (62, 64) stromaufwärts des mindestens einen Verteilerkreises (17, 24) eines oder mehrere der folgenden Elemente umfasst: einen Kühler (12), einen Erhitzer (13), einen Filter (14), eine Überdruckverbindung (11, 20), die in das Gehäuse (50) mündet, einen Drucksensor (15, 23), einen Partikelzähler (99, 990).

6. Mechanisches System nach einem der Ansprüche 1 bis 5,
**dadurch gekennzeichnet, dass** der mindestens eine Förderstromgenerator (35) mindestens eine elektromechanische Ansaugpumpe (37) umfasst, die mit mindestens einem Ansaugpunkt (36) und dem Behälter (1) verbunden ist.

7. Mechanisches System nach einem der Ansprüche 1 bis 6,
**dadurch gekennzeichnet, dass** der mindestens eine Förderstromgenerator (35) einen Ejektor (18, 19) umfasst, dessen Auslass hydraulisch mit dem Behälter (1) verbunden ist, wobei der Ejektor (18, 19) einen ersten Einlass aufweist, der hydraulisch mit mindestens einem Ansaugpunkt (36) verbunden ist, wobei der Ejektor (18, 19) einen zweiten Einlass aufweist, der hydraulisch mit dem hydraulischen Auslassnetzwerk (62, 64) verbunden ist.

8. Mechanisches System nach Anspruch 7,
**dadurch gekennzeichnet, dass** das hydraulische Auslassnetzwerk (62, 64) eine Drossel (16, 21) zwischen dem Ejektor (18, 19) und der Verteilerpumpe (10, 22) aufweist.

9. Mechanisches System nach einem der Ansprüche 1 bis 8,
**dadurch gekennzeichnet, dass** das Schmierfluidsystem (80) mindestens zwei Fluidkreise (71, 72) aufweist, die in mindestens einen Verteilerkreis (16, 24) münden, wobei jeder Fluidkreis (71, 72) mit einer eigenen Verteilerpumpe (10, 22) versehen ist, die über eine eigene hydraulische Eingangsverbindung (61, 63) mit dem Behälter (1) verbunden ist, und über ein eigenes hydraulisches Auslassnetz (62, 64) verfügt.

10. Mechanisches System nach Anspruch 9,
**dadurch gekennzeichnet, dass** die beiden Fluidkreise (71, 72) einen Hauptkreis (71) und einen im Falle eines Ausfalls des Hauptkreises (71) nutzbaren Notkreis (72) umfassen.

11. Mechanisches System nach einem der Ansprüche 1 bis 10,
**dadurch gekennzeichnet, dass** der Förderstromgenerator (35) einen Ejektor (18, 19) mit einem hydraulisch mit dem Behälter (1) verbundenen Ausgang aufweist, wobei der Ejektor (18, 19) einen ersten Einlass aufweist, der hydraulisch mit mindestens einem Ansaugpunkt (36) verbunden ist, wobei der Ejektor (18, 19) einen zweiten Einlass aufweist, der hydraulisch mit einer Einspritzpumpe (381, 382) verbunden ist, und die Einspritzpumpe (381, 382) hydraulisch mit dem Behälter (1) verbunden ist.

12. Mechanisches System nach einem der Ansprüche 1 bis 11,
**dadurch gekennzeichnet, dass** der mindestens eine Förderstromgenerator (35) mehrere Förderstromgeneratoren umfasst.

13. Luftfahrzeug (150) mit einem Getriebe (155), das einen Rotor (160) antreibt,
**dadurch gekennzeichnet, dass** das Getriebe (150) ein mechanisches System (100) nach einem der Ansprüche 1 bis 12 ist.

## Claims

1. Mechanical system (100) comprising a housing (50) and at least one component (90) to be lubricated or cooled arranged in the housing (50), the mechanical system (100) comprising a lubricating fluid system (80) provided with a lubricating fluid (85) and a reservoir (1) arranged in the housing (50), the reservoir (1) being a leaking reservoir and located above said at least one component (90) to be lubricated or cooled, the lubricating fluid (85) escaping from the reservoir (1) by gravity to reach said at least one component (90) to be lubricated or cooled, the lubricating fluid system (80) comprising at least one lifting flow generator (35) connected by at least one filling pipe (39) to the reservoir (1) and to at least one suction point (36) present in a bottom (51) of the housing (50), said lifting flow generator (35) being configured to fill the reservoir (1) with the lubricating fluid (85) present in said bottom (51) at least during a start-up phase (P1),
**characterised in that** said lubricating fluid system (80) comprises at least one fluid circuit (71, 72) provided with a distribution pump (10, 22) connected to the reservoir (1) by a hydraulic inlet connection (61, 63), the fluid circuit (71, 72) having a hydraulic outlet network (62, 64) comprising at least one distribution circuit (30) configured to eject said lubricating fluid (85) towards said at least one component (90) to be lubricated or cooled, the distribution pump (10, 22) being connected to the hydraulic outlet network (62, 64) and configured to take the lubricating fluid (85) from the reservoir (1) and circulate said lubricating fluid (85) from the hydraulic inlet connection (61, 63) to the hydraulic outlet network (62, 64).

2. Mechanical system according to claim 1,
**characterised in that** said reservoir (1) is a leaking reservoir having a leakage flow rate less than a supply flow rate of lubricating fluid (85) in the filling pipe (39).

3. Mechanical system according to any one of claims 1 to 2,
**characterised in that** the mechanical system (100) is configured to be able to move within a predetermined movement space (200) in relation to a reference frame of this mechanical system, said housing (50) comprising, at the end of the starting phase (P1), a volume (201) of lubricating fluid less than a predetermined volume allowing the at least one component (90) to be lubricated or cooled to be at least partially submerged when said mechanical system (100) moves in said predetermined movement space (200).

4. Mechanical system according to any one of claims 1 to 3,
**characterised in that** said reservoir (1) comprises a leaking enclosure (41) and at least one collector tank (2, 3) arranged in said enclosure (41), said collector tank (2, 3) being configured to overflow into the enclosure (41) and be filled with lubricating fluid (85) by the enclosure (41) at the end of the starting phase (P1), said hydraulic inlet connection (61, 63) running from said collector tank (2, 3) to the distribution pump (10, 22).

5. Mechanical system according to any one of claims 1 to 4,
**characterised in that** the hydraulic outlet network (62, 64) comprises, upstream of said at least one distribution circuit (17, 24), one or more of the following components: a cooler (12), a heater (13), a filter (14), a pressure relief connection (11, 20) opening into said housing (50), a pressure sensor (15, 23), a particle counter (99, 990).

6. Mechanical system according to any one of claims 1 to 5,
**characterised in that** said at least one lifting flow generator (35) comprises at least one electromechanical priming pump (37) connected to at least one suction point (36) and to the reservoir (1).

7. Mechanical system according to any one of claims 1 to 6,
**characterised in that** said at least one lifting flow generator (35) comprises an ejector (18, 19) having an outlet hydraulically connected to the reservoir (1), said ejector (18,19) having a first inlet hydraulically connected to the at least one suction point (36), said ejector (18, 19) having a second inlet hydraulically connected to the hydraulic outlet network (62, 64).

8. Mechanical system according to claim 7,
**characterised in that** said hydraulic outlet network (62, 64) comprises a narrowed section (16, 21) between the ejector (18, 19) and the distribution pump (10, 22).

9. Mechanical system according to any one of claims 1 to 8,
**characterised in that** said lubricating fluid system (80) comprises at least two fluid circuits (71, 72) opening into at least one distribution circuit (16, 24), each fluid circuit (71, 72) being provided with its own distribution pump (10, 22) connected to the reservoir (1) by its own hydraulic inlet connection (61, 63) and its own hydraulic outlet network (62, 64).

10. Mechanical system according to claim 9,
**characterised in that** said two fluid circuits (71, 72) comprise a main circuit (71) and a backup circuit (72) that can be used in the event of failure of the main circuit (71).

11. Mechanical system according to any one of claims 1 to 10,
**characterised in that** said lifting flow generator (35) comprises an ejector (18, 19) having an outlet hydraulically connected to the reservoir (1), said ejector (18, 19) having a first inlet hydraulically connected to at least one suction point (36), said ejector (18, 19) having a second inlet hydraulically connected to an injection pump (381, 382), said injection pump (381, 382) being hydraulically connected to the reservoir (1).

12. Mechanical system according to any one of claims 1 to 11,
**characterised in that** said at least one lifting flow generator (35) comprises several lifting flow generators.

13. Aircraft (150) provided with a gearbox (155) setting a rotor (160) in motion,
**characterised in that** said gearbox (150) is a mechanical system (100) according to any one of claims 1 to 12.
